# EUROPEAN PATENT APPLICATION

(11) **EP 4 614 714 A1**
(43) Date of publication of application: **10.09.2025**
(21) Application number: 22967713.3
(22) Date of filing: 30.12.2022
(51) Int. Cl.: H01M 50/531, H01M 50/55, H01M 50/553, H01M 50/682

(54) **LAMINATED BATTERY**

(30) Priority: 06.12.2022 CN 202211558148; 06.12.2022 CN 202223259262 U
(71) Applicant: Eve Power Co., Ltd., Jingmen, Hubei 448000 (CN)
(72) Inventor: HUANG, Liyang, Jingmen, Hubei 448000 (CN); XIA, Yang, Jingmen, Hubei 448000 (CN); WANG, Yu, Jingmen, Hubei 448000 (CN); CHENG, Cheng, Jingmen, Hubei 448000 (CN)
(74) Representative: Herrero & Asociados, S.L.
(86) International application number: PCT/CN2022/143795
(87) International publication number: WO 2024/119567

(57) **Abstract**

A laminated cell includes a case, a laminated cell, and a cap assembly. The case defines an opening at the top. The laminated cell includes multiple electrode clusters. Each electrode cluster includes multiple laminated electrodes and multiple tabs. Each tab extends out of a corresponding one of the electrodes. The multiple tabs of each electrode clusters form a tab bundle, and the tab bundle is connected to one pin. The cap assembly includes a connection portion and a pole, the pin is slidably connected to the connection portion, and electrically connected to the pole through the connection portion. The laminated cell in the laminated battery is simple to enter the case, the laminated cell is not easy to be scratched with the case, and it is possible to effectively reduce the occurrence of tearing of the tabs caused by the expansion of the laminated cell.

## Description

This present disclosure claims priorities to Chinese Patent Applications No. 202211558148.8 and No. 202223259262.9, which were filed on December 6, 2022 in the National Intellectual Property Administration of China, and the contents of which are herein incorporated by reference in their entireties.

### TECHNICAL FIELD

The present disclosure relates to the field of battery technologies, for example, to a laminated battery.

### BACKGROUND

Laminated batteries are square batteries with hard cases. The laminated batteries are manufactured based on a high-speed lamination process. The laminated batteries have wide application prospects due to their simple manufacturing process, high safety performance, high energy density, and long cycle life.

In the related art, a laminated battery typically includes a case, a laminated cell, and a cap assembly. The laminated cell is disposed inside the case, the case defines an opening, and the cap assembly is mounted at the opening defined in the case. The laminated cell includes a plurality of electrodes laminated or stacked on one another, and two opposite sides of each of the plurality of electrodes are connected to tabs, respectively. The tabs extend beyond the plurality of electrodes. The tabs on the plurality of electrodes are welded with each other and electrically connected to poles of the cap assembly. For the laminated battery with this configuration, in the process of assembly, it is difficult for the laminated cell to be placed into the case, and the tabs are prone to be folded or scratched with the case. Besides, during use, the laminated cell usually expands, and positions of the plurality of electrodes are changed, such that a portion of each of the tabs, which is connected to the corresponding one of the plurality of electrodes, is displaced or moved along with the corresponding one of the plurality of electrodes. However, since a position of a junction between each of the tabs and the cap assembly is unchanged or fixed, each of the tabs is prone to be torn.

### SUMMARY

The present disclosure provides a laminated battery. A laminated cell of the laminated battery is easy to be disposed in the case, the laminated cell is not easy to be scratched with the case, and it is possible to effectively reduce the occurrence of tearing of the tabs caused by the expansion of the laminated cell.

In some embodiments of the present disclosure, a laminated battery is provided. The laminated battery includes a case, a laminated cell, and a cap assembly. The case defines an opening at the top. The laminated cell includes a plurality of electrode clusters. Each of the plurality of electrode clusters comprises a plurality of electrodes stacked on one another and a plurality of tabs, each of the plurality of tabs extends out of a corresponding one of the plurality of electrodes, the plurality of tabs of each of the plurality of electrode clusters form a tab bundle, and the tab bundle is connected to a pin. The cap assembly comprises a connection portion and a pole. The pin is slidably connected to the connection portion electrically connected to the pole through the connection portion.

In some embodiments, a slide rail is disposed at a side of the connection portion facing the laminated cell, an extension direction of the slide rail is an expansion direction of the laminated cell, and the pin is slidably engaged with the slide rail.

In some embodiments, a plurality of slide rails are arranged on the connection portion and arranged side-by-side, a plurality of tab bundles are misaligned with each other, and two adjacent of the plurality of pins are disposed in different two of the plurality of slide rails.

In some embodiments, each of the pin and the connection portion is in shape of a sheet, the slide rail comprises two engaging portions parallel to each other, the engaging portions and the connection portion cooperatively define an engaging slot, and two opposite side edges of a corresponding one of the pins is engaged into the engaging slot.

In some embodiments, each of the plurality of electrodes is parallel to a bottom surface of the case.

In some embodiments, a first liquid reservoir is disposed at a top of the laminated cell, the first liquid reservoir comprises a first reservoir layer, the first reservoir layer is configured to store electrolyte, and the electrolyte is able to be exuded out from the first reservoir layer and infiltrated into the laminated cell.

In some embodiments, a second liquid reservoir is sandwiched between a side face of the laminated cell without the tabs and the inner wall of the case, the second liquid reservoir comprises a second reservoir layer, and the second reservoir is configured to store electrolyte and replenish the electrolyte to the laminated cell.

In some embodiments, at least one of the first reservoir layer and the second reservoir layer is a sponge or aerogel.

In some embodiments, a limiting structure is sandwiched between the second liquid reservoir and the inner wall of the case.In some embodiments, the limiting structure is a metal block or a plastic block.

The technical effects of the present disclosure are as follow.

In the laminated battery provided by some embodiments of the present disclosure, the laminated cell is disposed in the case opened at the top, and the cap assembly is utilized to encapsulate the case. A plurality of electrode clusters are arranged in the laminated cell, and the tab bundle of each of the plurality of electrode clusters is connected to one pin. Besides, the cap assembly includes a connection portion. After the pin is connected to the connection portion, the tabs may be electrically connected to the pole of the cap assembly. Since the pin is slidably connected to the connection portion, after the expansion of the pin, the tabs may drive the pin to slide on the connection portion. In this way, it is possible to effectively reduce the occurrence of tearing of the tabs. During the assembly of the laminated battery, the cap assembly may be first assembled with the laminated cell. After the assembly of the pins and the connection portion is finished, the cap assembly and the laminated cell which are assembled with each other are disposed or placed into the case. Since the connection portion is disposed between a side face of the laminated cell and an inner wall of the case, the connection portion is able to separate or barrier the tabs from the case. Thus, in the process of placing the cap assembly and the laminated cell which are assembled with each other into the case, the case will not be scratched with the tabs or the tabs will not be folded. In this way, the production yield of the laminated battery 10 may be effectively improved.

### BRIEF DESCRIPTION OF THE DRAWINGS

FIG. 1 is a schematic structural view of a case provided in some embodiments of the present disclosure.
FIG. 2 is a schematic structural view of a laminated cell provided in some embodiments of the present disclosure.
FIG. 3 is a partial structural view of the laminated cell provided in some embodiments of the present disclosure.
FIG. 4 is a schematic structural view of a cap assembly provided in some embodiments of the present disclosure.
FIG. 5 is a schematic structural view illustrating an assembly structure of a pin and a slide rail provided in some embodiments of the present disclosure.
FIG. 6 is a first schematic structural view of the slide rail provided in some embodiments of the present disclosure.
FIG. 7 is a second schematic structural view of the slide rail provided in some embodiments of the present disclosure.
FIG. 8 is a first cross-sectional view illustrating the assembly structure of the pin and the slide rail provided in some embodiments of the present disclosure.
FIG. 9 is a second cross-sectional view illustrating the assembly structure of the pin and the slide rail provided in some embodiments of the present disclosure.
FIG. 10 is a third cross-sectional view illustrating the assembly structure of the pin and the slide rail provided in some embodiments of the present disclosure.
FIG. 11 is a first partial structural view of a laminated battery provided in some embodiments of the present disclosure.
FIG. 12 is a second partial structural view of the laminated battery provided in some embodiments of the present disclosure.

In the drawings:
10, laminated battery; 100, case; 200, cap assembly; 210, connection portion; 220, slide rail; 221, engaging portion; 230, pole; 300, laminated cell; 301, electrode cluster; 310, electrode; 320, electrode tab; 321, tab bundle; 330, pin; 400, first liquid reservoir; 500, second liquid reservoir; 600, limiting structure.

### DETAILED DESCRIPTION

In the description of the present disclosure, it should be noted that, orientations or positional relationships indicated by terms "center", "up", "down", "left", "right", "vertical", "horizontal", "inner", "outer", etc., are based on the orientations or positional relationships shown in the accompanying drawings, and are merely for convenience of describing the present disclosure and simplifying the description, rather than implying or indicating that the device or the component referred to must have a particular orientation or constructed and operated in a particular orientation, and thus these terms cannot be understood as limiting the present disclosure. In addition, terms "first" and "second" are only for descriptive purposes and cannot be understood as indicating or implying relative importance. Terms "first position" and "second position" are two different positions. A first feature being "above", "on", and "on top of" a second feature includes the first feature being directly above and diagonally above the second feature, or indicates that the first feature is at a horizontal level higher than the second feature. The first feature being "below", "under", and "beneath" the second feature includes the first feature being directly below and diagonally below the second feature, or indicates that the first feature is at a horizontal level lower than the second feature.

In the description of the present disclosure, it should be noted that, unless expressly specified and limited, otherwise, terms "mounted", "coupled", "connected" shall be interpreted broadly, such as fixed connection, detachable connection, or integrally connected; mechanical connection or electrical connection; direct connection, indirect connection via an intermediate medium, or communication between inner spaces of two elements. Those skilled person in the art shall understand specific meanings of the above terms in the present disclosure based on specific cases.

Some embodiments of the present disclosure are described below, and examples of the embodiments are shown in the accompanying drawings. Same or similar reference numerals indicate the same or similar elements or elements having the same or similar functions throughout the present disclosure. The embodiments described below by reference to the accompanying drawings are exemplary and are only for the purpose of explaining the present disclosure.

Some embodiments provide a laminated battery 10. The laminated battery 10 may include a case 100, a laminated cell 300, and a cap assembly 200. The top of the case 100 defines an opening, or the case 100 is opened at the top. The laminated cell 300 may include a plurality of electrode clusters 301. Each of the plurality of electrode clusters 301 includes a plurality of electrodes 310 stacked on one another. In some embodiments, each of the electrodes 310 may be in shape of a plate or a sheet. Each of the plurality of electrode clusters 301 further includes a plurality of tabs 320, and each tab 320 protrudes from or extends out of or extends beyond a corresponding one of the plurality of electrodes 310. The tabs 320 in each of plurality of electrode clusters 301 form a tab bundle 321. The laminated cell 300 may further include a plurality of pins 330. Each tab bundle 321 is connected to a corresponding one of the pins 330. The cap assembly 200 includes a connection portion 210 and a pole 230. The pins 330 are slidably connected to the connection portion 210. The pins 330 are electrically connected to the pole 230 through the connection portion 210.

In the laminated battery 10 described above, the laminated cell 300 is placed into the case 100 opened at the top, and utilizes the cap assembly 200 to encapsulate the case 100. The laminated cell 300 includes a plurality of electrode clusters 301. The tab bundle 321 of each of the plurality of electrode clusters 301 is connected to the same pin 330. Besides, the cap assembly 200 includes the connection portion 210. After the pins 330 are connected to the connection portion 210, the tabs 320 may be electrically connected to the pole 230 of the cap assembly 200. Since the pins 330 are slidably connected to the connection portion 210, after the electrodes 310 expand, the tabs 320 may drive the pins 330 to slide on the connection portion 210, thereby effectively reducing the possibility of tearing the tabs 320. During the assembly of the laminated battery 10, the cap assembly 200 may be first assembled with the laminated cell 300. After the assembly of the pins 330 and the connection portion 210 is finished, the cap assembly 200 and the laminated cell 300 which are assembled with each other are disposed or placed into the case 100. Since the connection portion 210 is disposed between a side face of the laminated cell 300 and an inner wall of the case 100, the connection portion 210 is able to separate or barrier the tabs 320 from the case 100. Thus, in the process of placing the cap assembly 200 and the laminated cell 300 which are assembled with each other into the case 100, the case 100 will not be scratched with the tabs 320 or the tabs 320 will not be folded. In this way, the production yield of the laminated battery 10 may be effectively improved.

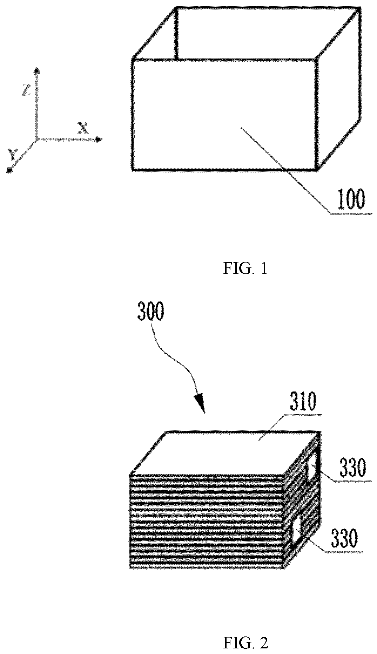

FIG. 1 illustrates the case 100 of the laminated battery 10 provided in some embodiments of the present disclosure. The case 100 is substantially cuboid. In some embodiments, the Z axis direction in FIG. 1 is a height direction of the case 100.

FIG. 2 illustrates the laminated cell 300 provided in some embodiments of the present disclosure. In the laminated cell 300, a plurality of electrodes 310 are stacked on one another, and left and right sides of each of the plurality of electrodes 310 have the tabs 320 protruding therefrom, respectively.

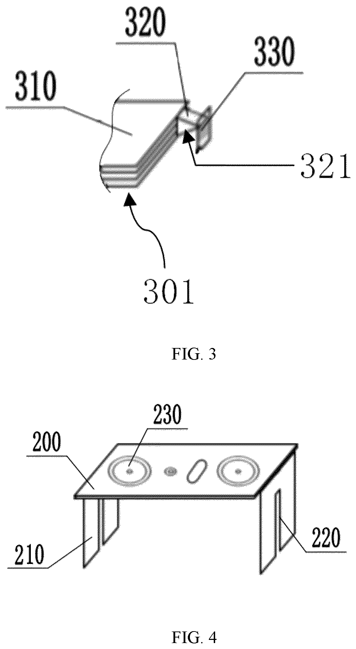

FIG. 3 illustrates an assembly structure of the tabs 320 and the pin 330. In some embodiments, the tabs 320 are divided into a plurality of tab bundles 321, free ends of a plurality of tabs 320 in each tab bundle 321 are connected to one pin 330. In some embodiments, the tabs 320 in each tab bundle 321 may be connected to the corresponding one of the pins 330 by welding. In some embodiments, if the number of the tabs 321 in one tab bundle 320 is too large, there is a risk that the tab 320 located on a bottom layer and the tab 320 located on a top layer may be pulled and torn after the expansion of the electrodes 310, since distances between these tabs 320 and a welding point are far, respectively. However, if the number of the tabs 321 in a single tab bundle 321 is too small, more pins 330 are needed to be arranged in the laminated cell 300, which increases the number of welding and prolongs the production cycle. Therefore, in the actual production process, the number of the tabs 320 in each tab bundle 321 may be set according to the needs, to ensure that damage problems such as tearing the tabs 320 will not easily occur.

FIG. 4 is a schematic structural view of a cap assembly 200 provided in some embodiments of the present disclosure. As shown in FIG. 4, the connection portion 210 is inserted between a side of the laminated cell 300 having the tabs 320 and the inner wall of the case 100. In some embodiments, the tabs 320 are disposed at two opposite sides of the laminated cell 300, and each of two opposite sides of the cap assembly 200 has the connection portion 210, accordingly. In some embodiments, a slide rail 220 is arranged on the connection portion 210 of the cap assembly 200. The slide rail 220 is located at a side of the connection portion 210 facing the laminated cell 300. An extension direction of the slide rail 220 is an expansion direction of the laminated cell 300, that is, the thickness direction of the electrodes 310. The pin 330 may be slidably engaged with the slide rail 220. With the expansion of the electrode 310, the pin 330 may slide on the slide rail 220, to reduce the risk of tearing of the tabs 320 caused by the expansion and displacement accumulation of the electrode 310. In some embodiments, the left side and the right side of the laminated cell 300 are arranged with the tabs 320. Accordingly, each of the left side and the right side of the cap assembly 200 is arranged with the connection portion 210 and the slide rail 220, respectively.

In some embodiments, each of the electrodes 310 may be parallel to a bottom surface of the case 100. Thus, the expansion direction of the laminated cell 300 is the height direction of the case 100, that is, the slide rail 220 may extend in the height direction of the case 100. In other embodiments, each of the electrodes 310 may also be perpendicular to the bottom surface of the case 100. Accordingly, the expansion direction of the laminated cell 300 is a width direction or a length direction of the case 100, and the slide rail 220 may extend along the width direction or the length direction of the case 100.

In some embodiments, a plurality of slide rails 220 may be disposed on the connection portion 210 and arranged side-by-side. The plurality of tab bundles 321 may be misaligned or staggered with each other, and two adjacent of the pins 330 are arranged in different slide rails 220. In this way, the possibility that the two adjacent of the pins 330 cannot be moved or displaced in the slide rails 220 due to interference between two adjacent of the pins 330 may be reduced, and the risk of tearing the tabs 320 may be reduced. Of course, in other embodiments, the number of the slide rails 220 may also be one, and all the pins 330 of the laminated cell 300 may be disposed on the same line, such that all the pins 330 may be cooperated with the same slide rail 220.

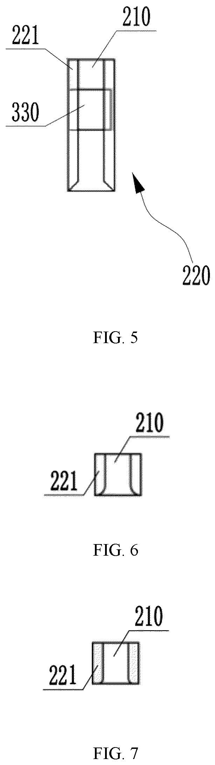

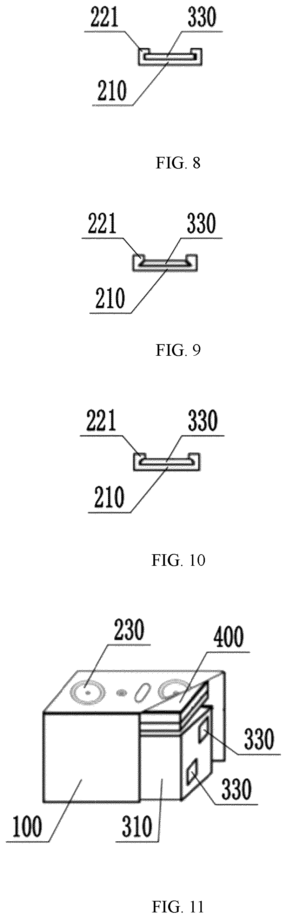

As shown in FIGS. 4 and 5, in some embodiments, the pins 330 and the connection portions 210 are both in shape of sheets or plates. The slide rail 220 includes two engaging portions 221 parallel to each other. The engaging portions 221 and the connection portion 210 are connected to each other to form or define an engaging slot. Two opposite side edges of a corresponding one of the pins 330 are engaged into the engaging slot. In this way, by arranging the pin 330 and the connection portion 210 in shape of sheets, inner space of the case 100 occupied by the pins 330 and the connection portion 210 may be minimized. By arranging the engaging portion 221, it is possible to effectively reduce the possibility that the pins 330 fall from the engaging slot. As shown in FIGS. 5 and 7, each engaging portion 221 may be substantially in shape of a strip or a bar. In order to facilitate the insertion of the pins 330 into the engaging slot, it is possible to form a chamfer or a notch or a filleted corner on an end portion of each of the engaging portions 221. Of course, the shape of each of the engaging portions 221 is not limited to this, in other embodiments, the shape of each of the engaging portions 221 may be designed as required, as long as ensuring that the pins 330 are slidable in the engaging slot. As shown in FIGS. 8 to 10, a cross section of the engaging slot may be in shape of a square, a rounded rectangle, an arc, etc. The pins 330 may be slidably connected to the connection portion 210 by using the cooperation between the engaging slot and the pins 330. The structure is simple, and the assembly is convenient.

In other embodiments, the slide rail 220 may also be a protruding structure arranged on the connection portion 210, and the pin 330 may be a groove. The protruding structure is inserted into the groove, and the pin 330 is slidable along the extension direction of the protruding structure.

In some embodiments, as shown in FIG. 11, a first liquid reservoir 400 may be disposed at the top of the laminated cell 300. The first liquid reservoir 400 may include a first reservoir layer. The first reservoir layer is configured to store electrolyte, and the electrolyte may be exuded out from the first reservoir layer and infiltrated into the laminated cell 300. The first reservoir layer may be able to withstand the press or squeezing of the laminated cell 300. After being pressed or squeezed, the electrolyte in the first reservoir layer may penetrate the first reservoir layer and be infiltrated into the laminated cell 300. Therefore, the first reservoir layer may be elastic, microporous, and may not react with the electrolyte. In some embodiments, the first reservoir layer may be a sponge, aerogel, etc. In some embodiments, the number of the first liquid reservoirs 400 may be one or more, and the number of the first liquid reservoirs 400 may be set according to the needs of use.

In some embodiments, each of the electrodes 310 is parallel to the bottom surface of the case 100, and the first liquid reservoir 400 is parallel to each of the electrodes 310. In one aspect, the first liquid reservoir 400 may be capable of filling a gap defined between the laminated cell 300 and the cap assembly 200, and limiting the shaking of the laminated cell 300 in the height direction of the case 100. In another aspect, with the use of the laminated battery 10, the electrolyte is gradually consumed, and the laminated cell 300 may be expanded, which squeezes the first liquid reservoir 400 at the top, and the electrolyte may penetrate the first reservoir layer and be replenished or refilled into the laminated cell 300. In a further aspect, the laminated cell 300 is usually seriously expanded in the middle and slightly at the edge, the stress applied to the surface of the electrode 310 is uneven due to the greater expansion in the middle, and accumulation of the expansion leads to deformation of the electrode 310, which ultimately affects a performance and a service cycle of the laminated battery 10. The first liquid reservoir 400 has elasticity and is able to generate downward pressure to the electrodes 310, such that the expansion in the middle region of the laminated cell 300 may be suppressed, thereby reducing the deformation degree of the electrodes 310, and reducing the problem of performance degradation of the laminated battery 10 caused by the deformation of the electrodes 310. Thus, it is possible to ensure that the battery has a good performance and a long service cycle during long-term use. In other embodiments, when the electrodes 310 are disposed perpendicular to the bottom surface of the case 100, the first liquid reservoir 400 is disposed perpendicular to the electrode 310. In this case, the electrolyte in the laminated cell 300 is deposited at the bottom due to gravity, and the electrolyte in the first liquid reservoir 400 may supplement the electrolyte at the top of the laminated cell 300.

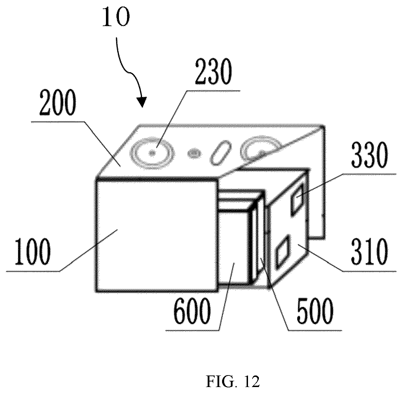

In some embodiments, as shown in FIG. 12, a second liquid reservoir 500 may be sandwiched between the side face of the laminated cell 300 without the tabs 320 and the inner wall of the case 100. The second liquid reservoir 500 may include a second reservoir layer. The second reservoir layer is configured to store electrolyte and replenish the electrolyte into the laminated cell 300. In some embodiments, the second liquid reservoir 500 may be symmetrically disposed at front and rear sides of the laminated cell 300. The second reservoir layer may also be made of a material that is elastic, microporous, and does not react with the electrolyte. In some embodiments, the second reservoir layer may also be a sponge, aerogel, etc. The material of the first reservoir layer and that of the second reservoir layer may be the same as or different from each other. The second liquid reservoir 500 may be configured to limit the shaking of the laminated cell 300 in the horizontal direction. The electrolyte in the second reservoir layer may be infiltrated into a portion of the lamination cell 300 with less electrolyte. In this way, it is possible to reduce the occurrence of the problem of having abundant electrolyte at the bottom of the laminated battery 10 while insufficient electrolyte at the top of the laminated battery 10 due to the gravity. Thus, it is possible to effectively reduce the occurrence of circulation failure caused by insufficient electrolyte at the top, and the infiltration property of the electrolyte and the circulation performance of the laminated battery10 may be improved. In some embodiments, the number of the second liquid reservoirs 500 may be one or more, and the number of the second liquid reservoir 500 may be set according to the needs of use.

In some embodiments, a limiting structure 600 may be sandwiched between the second liquid reservoir 500 and the inner wall of the case 100. In order to facilitate placing the laminated cell 300 into the case 100, the volume of the case 100 is larger or greater than that of the laminated cell 300. The limiting structure 600 may be disposed on a surface of the second liquid reservoir 500 away from or opposite to the electrodes 310. In this way, on one hand, it is possible to limit the shaking of the laminated cell 300 in the horizontal direction; and one the other hand, it is possible to effectively reduce the occurrence that a large amount of electrolyte stored in the second liquid reservoir 500 cannot be released. The limiting structure 600 may be a plastic block or a metal block, etc. In the actual production process, the thickness of the limiting structure 600 and the thickness of the second liquid reservoir 500 may be adjusted as needed, as long as ensuring that the lamination cell 300 is not displaced in the horizontal direction and the electrolyte in the second liquid reservoir 500 is enabled to be fully utilized. In some embodiments, the number of the limiting structures 600 may be one or more, and the number of the limiting structures 600 may be set according to the needs of use. In some embodiments, another limiting structure 600 may also be sandwiched between the first liquid reservoir 400 and the inner wall of the case 100. The volume of the case 100 is greater than the volume of the laminated cell 300. The another limiting structure 600 may be disposed on a surface of the first liquid reservoir 400 away from or opposite to the electrodes 310. In this way, on one hand, it is possible to limit the shaking of the laminated cell 300 in the vertical direction; and one the other hand, it is possible to effectively reduce the occurrence that a large amount of electrolyte stored in the first liquid reservoir 400 cannot be released. In the actual production process, the thickness of the limiting structure 600 and the thickness of the first liquid reservoir 400 may be adjusted as needed, as long as ensuring that the lamination cell 300 is not displaced in the vertical direction and the electrolyte in the first liquid reservoir 400 is enabled to be fully utilized. In some embodiments, the another limiting structure 600 may be a plastic block or a metal block, etc. In some embodiments, the number of the another limiting structures 600 may be one or more, and the number of the another limiting structures 600 may be set according to the needs of use.

## Claims

1. A laminated battery (10), comprising:
a case (100), defining an opening at the top;
a laminated cell (300), comprising a plurality of electrode clusters (301), wherein each of the plurality of electrode clusters (301) comprises a plurality of electrodes (310) stacked on one another and a plurality of tabs (320), each of the plurality of tabs (320) extends out of a corresponding one of the plurality of electrodes (310), the plurality of tabs (320) of each of the plurality of electrode clusters (301) form a tab bundle (321), and the tab bundle (321) is connected to a pin (330); and
a cap assembly (200), comprising a connection portion (210) and a pole (230), wherein the pin (330) is slidably connected to the connection portion (210) electrically connected to the pole (230) through the connection portion (210).

2. The laminated battery as claimed in claim 1, wherein a slide rail (220) is disposed at a side of the connection portion (210) facing the laminated cell (300), an extension direction of the slide rail (220) is an expansion direction of the laminated cell (300), and the pin (330) is slidably engaged with the slide rail (220).

3. The laminated battery as claimed in claim 2, wherein a plurality of slide rails (220) are arranged on the connection portion (210) and arranged side-by-side, a plurality of tab bundles (321) are misaligned with each other, and two adjacent of the plurality of pins (330) are disposed in different two of the plurality of slide rails (220).

4. The laminated battery as claimed in claim 2, wherein each of the pin (330) and the connection portion (210) is in shape of a sheet, the slide rail (220) comprises two engaging portions (221) parallel to each other, the engaging portions (221) and the connection portion (210) cooperatively define an engaging slot, and two opposite side edges of a corresponding one of the pins (330) is engaged into the engaging slot.

5. The laminated battery as claimed in claim 2, wherein each of the plurality of electrodes (310) is parallel to a bottom surface of the case (100).

6. The laminated battery as claimed in claim 1, wherein a first liquid reservoir (400) is disposed at a top of the laminated cell (300), the first liquid reservoir (400) comprises a first reservoir layer, the first reservoir layer is configured to store electrolyte, and the electrolyte is able to be exuded out from the first reservoir layer and infiltrated into the laminated cell (300).

7. The laminated battery as claimed in claim 6, wherein a second liquid reservoir (500) is sandwiched between a side face of the laminated cell (300) without the tabs (320) and the inner wall of the case (100), the second liquid reservoir (500) comprises a second reservoir layer, and the second reservoir is configured to store electrolyte and replenish the electrolyte to the laminated cell (300).

8. The laminated battery as claimed in claim 7, wherein at least one of the first reservoir layer and the second reservoir layer is a sponge or aerogel.

9. The laminated battery as claimed in claim 8, wherein a limiting structure (600) is sandwiched between the second liquid reservoir (500) and the inner wall of the case (100).

10. The laminated battery as claimed in claim 9, wherein the limiting structure (600) is a metal block or a plastic block..
